**Europäisches Patentamt**

**European Patent Office**

**Office européen des brevets**

(19)

(11) Veröffentlichungsnummer: **0 518 001 A1**

(12) **EUROPÄISCHE PATENTANMELDUNG**

(21) Anmeldenummer: **92103496.3**

(22) Anmeldetag: **29.02.92**

(51) Int. Cl.5: **D06C 3/02**, F16G 13/00

(30) Priorität: **06.06.91 DE 4118493**

(43) Veröffentlichungstag der Anmeldung:
**16.12.92 Patentblatt 92/51**

(84) Benannte Vertragsstaaten:
**AT BE CH DE ES FR GB IT LI**

(71) Anmelder: **A. Monforts GmbH & Co**
**Schwalmstrasse 301**
**W-4050 Mönchengladbach 2(DE)**

(72) Erfinder: **Freiberg, Helge**
**Dr. Carl-Gördeler-Strasse 12**
**W-4050 Mönchengladbach 4(DE)**
Erfinder: **Baum, Gottfried**
**Golkrather Strasse 8**
**W-5140 Erkelenz(DE)**

(74) Vertreter: **von Creytz, Dietrich, Dipl.-Phys.**
**Tannenweg 25**
**W-5144 Wegberg(DE)**

(54) **Gleitbuchse.**

(57) In einer Spannrahmengleitkette kann der die Kettenglieder zusammenhaltende Gelenkbolzen in einer aus hochtemperaturstandfestem Kunstharz bestehenden, vorgefertigten Gleitbuchse (7) gelagert werden, wenn die Gleitbuchse (7) einen sich schräg in Bezug auf ihre Längsrichtung besitzenden, durchgehenden, Längsschlitz (14) besitzt.

Fig.2

Fig.3

EP 0 518 001 A1

Die Erfindung betrifft eine Gleitbuchse einer zum kontinuierlichen Führen und/oder Breitstrecken einer textilen Stoffbahn dienenden Gleitkette einer Stoffbahnspannmaschine, wobei die Gleitkette Gelenkteile aufweist, zu denen jeweils eine zu einem Kettenglied gehörende Tragbüchse und ein durch Bohrungen eines Nachbarkettenglieds sowie in die Tragbüchse gesteckter Gelenkbolzen gehören, wobei die als schmierungsfreies Lager bestehende Gleitbuchse aus hochtemperaturfestem Kunstharz radial zwischen der Tragbüchse und den Gelenkbolzen angeordnet ist.

Bei einem solchen Gelenkteil einer Spannrahmenkette wird die aus dem Kunstharz bestehende Gleitbuchse gemäß US-PS 49 26 529 dadurch hergestellt, daß ein Kunststoffteil aus dem genannten Material zunächst in die vorzugsweise aus Stahl bestehende Tragbüchse eingepreßt wird und daß dann zum Fertigstellen der Gleitbuchse ausgebohrt wird.

Durch das Ausbohren einer durch Einpressen in die Tragbüchse verdrehgesicherten Gleitbuchse läßt sich die Wandstärke der letzteren auf einen zum Herstellen eines schmierungsfreien Lagers mininmales Maß bringen, so daß die bei Betrieb unter Spannung stehende Kette keine durch Fließen des Kunstharzes bedingte Längenänderung erfährt. Das Einpressen und Ausbohren der Gleitbuchse ist jedoch ein arbeitsaufwendiger Verfahrensschritt bei der Herstellung der Kette.

Eine an sich naheliegende Vereinfachung bestände darin, die aus Kunstharz bestehende Gleitbuchse vorzufertigen und lose in den Raum zwischen Tragbüchse und Gelenkbolzen einzuschieben. Thermische und/oder mechanische Spannungen führen dann aber leicht zu einem Bruch der weniger auf mechanische Standfestigkeit als auf minimale Reibwerte ausgelegten Gleitbuchse. Eine lose in den Raum zwischen die Tragbüchse und den Gelenkbolzen eingesetzte Kunstharz-Gleitbuchse soll außerdem in ihrer vorgeschriebenen Position arretiert werden, die verhindert, daß die Gleitbuchse bei der Montage oder beim Betrieb aus dem Raum zwischen der Tragbüchse und dem Gelenkbolzen teilweise oder ganz nach unten rutscht.

Der Erfindung liegt die Aufgabe zugrunde, eine aus hochtemperaturfestem Kunstharz bestehende Gleitbuchse zum losen Einsetzen zwischen die Tragbüchse und den Gelenkbolzen des beschriebenen Gelenkteils einer Spannrahmenkette zu schaffen, die durch Formgebung auch bei den in Stoffbahnspannmaschinen stark schwankenden und extremen mechanischen und thermischen Belastungen stabil bleibt, insbesondere bei sachgemäßer Handhabung nicht bricht, und die bei der Montage einfach von oben bzw. von einer Seite in die Tragbüchse eingesteckt werden kann. Die erfindungsgemäße Lösung besteht darin, daß die Gleitbuchse vorgefertigt ist und einen sich schräg in Bezug auf ihre Zylinderachse erstreckenden, durchgehenden Schlitz aufweist.

Durch die Erfindung wird erreicht, daß sich die aus Kunstharz bestehende Gleitbuchse in ihrem Umfang den mechanisch und/oder thermisch vorgegebenen Bedingungen ohne weiteres anpassen kann. Da der Schlitz nicht parallel, sondern schräg - eigentlich "windschief" -, vorzugsweise um größenordnungsmäßig 10 bis 30°, zur Zylinderachse der Buchse gerichtet ist, stört er den Lauf bzw. die Schmierwirkung bei Betrieb des Kettengelenks nicht. Der Schlitz kann erfindungsgemäß nach dem Herstellen, insbesondere Pressen oder Spritzgießen, der Gleitbuchse in diese eingebracht, z.B. eingesägt, werden. Er kann aber auch unmittelbar beim Pressen, Spritzgießen oder dergleichen eingeformt werden.

Gemäß weiterer Erfindung soll die aus Kunstharz bestehende Gleitbuchse an einem Ende eine oder mehrere radial nach außen vorspringende Nasen oder dergleichen besitzen, die beim Einsetzen der Gleitbuchse in die Tragbüchse auf deren Rand aufliegt. Insbesondere werden an dem oberen Rand der Tragbüchse den Nasen entsprechende Ausnehmungen vorgesehen, so daß eine definierte, im allgemeinen gegenüber der Tragbüchse verdrehungsfreie Position gesichert ist. Die Durchfallsicherung mit Hilfe der Nasen ist besonders vorteilhaft bei der Montage der Kette, weil die Buchse nicht versehentlich durch die Tragbüchse hindurchfallen kann. Die Verdrehsicherung mit Hilfe der Nasen ist besonders dann vorteilhaft, wenn koaxial außen auf der Tragbüchse das Kugellager einer horizontale Querspannkräfte übertragenden Rolle angeordnet und dieses Kugellager radial von innen über eine Bohrung des Gelenkbolzens zu schmieren ist; in diesem Fall soll die Gleitbuchse eine mit dem koaxialen Schmierkanal fluchtende Öffnung besitzen; vgl. hierzu DE-OS 35 29 683.

Die erfindungsgemäßen Nasen werden vorzugsweise unmittelbar beim Herstellen der Buchse, insbesondere durch Pressen, Spritzgießen oder dergleichen gebildet, das heißt an den Körper der Gleitbuchse angeformt.

Anhand der schematischen Zeichnung eines Ausführungsbeispiels werden Einzelheiten der Erfindung erläutert. Es zeigen:

Fig. 1    eine Draufsicht auf einen Teil einer Spannrahmenkette;

Fig. 2    einen vertikalen Schnitt durch den Kettenteil von Fig. 1; und

Fig. 3    eine perspektivische Darstellung einer einen Schlitz aufweisenden Gleitbuchse.

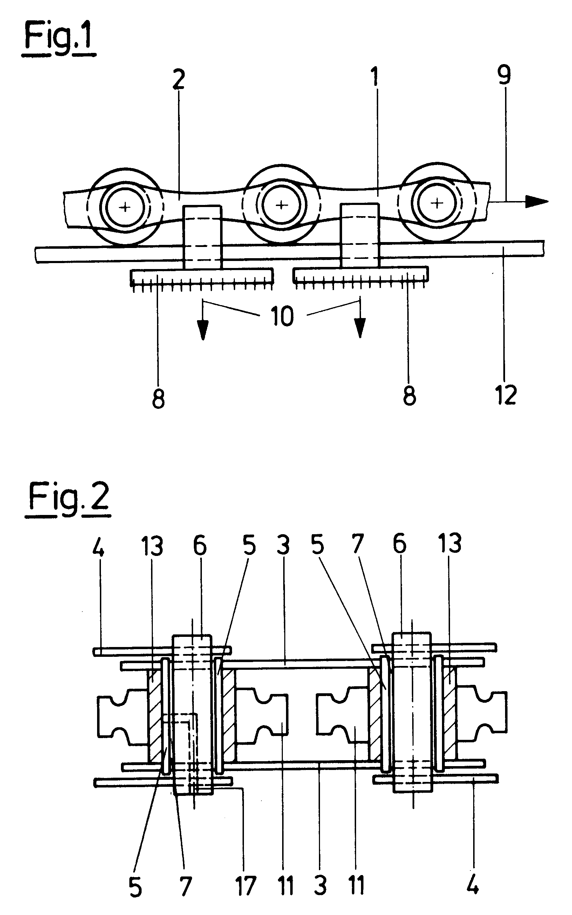

In Fig. 1 und 2 wird ein Teil einer horizontal umgelenkten Spannrahmenkette dargestellt. Aufgabe einer solche Kette ist es, bahnförmige Güter, z.B. textile Flächengebilde, seitlich mit Hilfe sogenannter Kluppen oder Nadelleisten aufzunehmen und in breitgespanntem Zustand durch eine Wärmebehandlungsmaschine zu führen. Die Kette nach Fig. 1 und 2 besitzt Kettenlaschen 1 und 2, die aus je zwei Laschenzungen 3 und 4 mit je zwei eingepreßten Tragbüchsen 5 einerseits bzw. Gelenkbolzen 6 andererseits zusammengehalten werden. In jeder der vorzugsweise aus Stahl bestehenden Tragbüchsen 5 wird im Ausführungsbeispiel ein Gelenkbolzen 6 mit Hilfe einer Gleitbuchse 7 schmiermittelfrei gelagert. Die Gleitbuchse 7 nimmt unter anderem die Kettenspannkräfte (Kräfte in Kettenlängsrichtung) auf.

An den Gelenkbolzen 6 oder an anderer Stelle der Kettenlaschen 1 bzw. 2 werden Kluppen oder Nadelleisten 8 zum seitlichen Festhalten des zu bearbeitenden Guts angesetzt. Über diese Kluppen oder Nadelleisten 8 werden horizontale Querkräfte 10 auf die Kette ausgeübt. Die Spannrahmenkette läuft bei Betrieb in Transportrichtung 9 und wird in dieser Richtung gespannt. Die zugleich auf die Kette von dem zu bearbeitenden bahnförmigen Gut herwirkende horizontale Querkraft 10 wird mit Hilfe von koaxial auf den Tragbüchsen gelagerten Laufrollen 11 an einer Laufschiene 12 abgefangen. Zwischen die Laufrolle 11 und die Tragbüchse 5 wird ein Lager 13 gesetzt, das eine möglichst reibungsfreie Drehung der Rolle 11 gegenüber der Tragbüchse 5 garantieren soll.

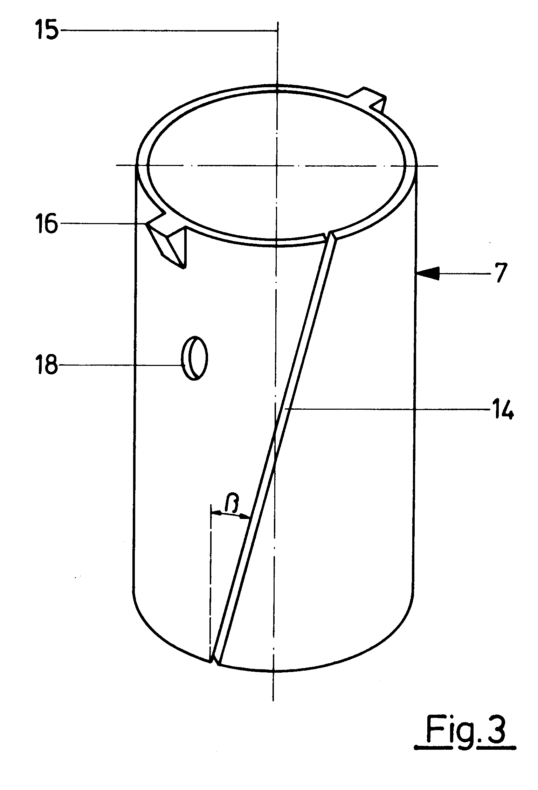

Die Gleitbuchse 7 soll aus einem hochtemperaturstandfesten Kunstharz bestehen, das so reibungs- und verschleißarm ist, daß die Kette zumindest im Bereich zwischen Tragbüchse 5 und Gelenkbolzen 6 schmierungsfrei zu betreiben ist. Fig. 3 zeigt ein erfindungsgemäßes Ausführungsbeispiel einer solchen Gleitbuchse 7 in perspektivischer Darstellung. Außen- und Innendurchmesser der Gleitbuchse 7 werden beim Herstellen der Buchse so vorgegeben, daß die Buchse 7 lose in den zylinderringförmigen Raum zwischen Tragbüchse 5 und Gelenkbolzen 6 einzuschieben ist.

Irgendwelche, durch die Herstellung bedingten oder durch thermische bzw. mechanische Spannungen hervorgerufene Toleranzen werden erfindungsgemäß durch einen in den Mantel der Gleitbuchse 7 eingebrachten Schlitz 14 ausgeglichen, dessen Breite bei einem Außendurchmesser der Gleitbuchse 7 von etwa 15 mm und bei einer Wandstärke der Gleitbuchse von etwa 1 mm in der Größenordnung von etwa vorzugsweise 0,1 bis 1,0 mm liegen soll. Wichtig ist eine gewisse Neigung des Schlitzes 14 in Bezug auf die Zylinderachse 15 der Gleitbuchse 7, vorzugsweise soll die in der Zeichnung mit dem Winkel $\beta$ bezeichnete Neigung in der Größenordnung von 10 bis 30° liegen. Diese Neigung ist für den Betrieb der Gleitbuchse 7 wichtig, weil dadurch die Tragkraft der Gleitbuchse 7 in keiner Richtung nennenswert geschwächt ist und durch den Schlitz 14 bedingte "Stöße" nicht auftreten können.

Gemäß weiterer Erfindung werden an einem Ende der Gleitbuchse 7 an deren Außenfläche Nasen 16 angebracht, die sich beim Einsetzen der Gleitbuchse 7 in die Tragbüchse 5 auf deren oberen Rand auflegen oder in dort vorgesehene Ausnehmungen einsetzen. Die Nasen 16 erleichtern also nicht nur die Montage, weil sie ein Durchfallen der Gleitbuchse 7 durch die Tragbüchse 5 ausschließen, sondern ermöglichen es auch, die Gleitbuchse 7 gegenüber der Tragbüchse 5 verdrehfest zu halten, wie das angestrebt wird, wenn das Lager der Laufrolle 11 gemäß DE-OS 35 29 683 über einen in Fig. 2 gestrichelt gezeichneten Schmierkanal 17 und - unter anderem - ein Loch 18 in der Wand der Gleitbuchse 7 zu schmieren sein sollte.

Bezugszeichenliste

| | |
|---|---|
| 1 | = Kettenlasche |
| 2 | = Kettenlasche |
| 3 | = Laschenzunge |
| 4 | = Laschenzunge |
| 5 | = Tragbüchse |
| 6 | = Gelenkbolzen |
| 7 | = Gleitbuchse |
| 8 | = Nadelleiste |
| 9 | = Transportrichtung |
| 10 | = Querkraft |
| 11 | = Stahlrolle |
| 12 | = Laufschiene |
| 13 | = Lager |
| 14 | = Schlitz |
| 15 | = Zylinderachse |
| 16 | = Nase |
| 17 | = Schmierkanal |
| 18 | = Schmierloch |

**Patentansprüche**

**1.** Gleitbuchse (7) einer zum kontinuierlichen Führen und/oder Breitstrecken einer textilen Stoffbahn dienenden Gleitkette einer Stoffbahnspannmaschine, wobei die Gleitkette Gelenkteile aufweist, zu denen jeweils eine zu einem Kettenglied gehörende Tragbüchse (5) und ein durch Bohrungen eines Nachbarkettengliedes sowie in die Tragbüchse (5) gesteckter Gelenkbolzen (6) gehören, wobei die aus hochtemperaturstandfestem Kunstharz bestehende Gleitbuchse (7) als schmierungsfreies Lager radial zwischen der Tragbüchse (5) und dem Gelenkbolzen (6) angeordnet ist, **dadurch gekennzeichnet,** daß die Gleitbuchse (7) vorgefertigt ist und einen sich schräg in Bezug auf ihre Zylinderachse (15) erstreckenden, durchgehenden Schlitz (14) aufweist.

2. Gleitbuchse nach Anspruch 1,
   **dadurch gekennzeichnet,**
   daß der Schlitz (14) um größenordnungsmäßig 10 bis 30° geneigt zur Zylinderachse (15) steht.

3. Gleitbuchse nach Anspruch 1 oder 2,
   **dadurch gekennzeichnet,**
   daß der Schlitz (14) unmittelbar beim Ausformen der Gleitbuchse (7) oder durch Einschneiden der fertigen Gleitbuchse gebildet ist.

4. Gleitbuchse nach mindestens einem der Ansprüche 1 bis 3,
   **gekennzeichnet durch**
   mindestens eine an einem Buchsenlängsende außen radial vorspringende Nase (16).

5. Gleitbuchse nach Anspruch 4,
   **dadurch gekennzeichnet,**
   daß die Nase (16) beim Herstellen an den Buchsenkörper angeformt ist.

## Fig.1

## Fig.2

5

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | EP-A-0 412 356 (BRÜCKNER)<br>* Spalte 2, Zeile 44 - Spalte 3, Zeile 38; Figuren 1-3 *<br>--- | 1,2,3 | D 06 C    3/02<br>F 16 G   13/00 |
| Y | FR-A-1 381 343 (MASSEY-FERGUSON)<br>* Seite 2, linke Spalte, Zeilen 8-25; Figuren 2,3 *<br>--- | 1,2,3 | |
| A | FR-A-1 113 802 (THOMSON)<br>* Seite 3, linke Spalte, Zeilen 18-27; Seite 3, rechte Spalte, Zeilen 18-27; Figuren 1,8 *<br>--- | 1,4,5 | |
| A | US-A-3 056 637 (SHANLEY)<br>* Spalte 3, Zeilen 35-47; Figur 1 *<br>--- | 1,2 | |
| A | US-A-2 816 453 (FRANK)<br>* Spalte 2, Zeilen 13-17; Figuren 2,3 *<br>--- | 1 | |
| A | GB-A- 150 421 (WOOD)<br>* Seite 2, Zeilen 70-80; Figuren 1-3 *<br>--- | 1,4,5 | RECHERCHIERTE SACHGEBIETE (Int. Cl.5) |
| A | GB-A- 179 331 (POWLEY)<br>* Insgesamt *<br>--- | 4,5 | F 16 G<br>D 06 C |
| A,D | US-A-4 926 529 (HOSMER)<br>---                    -/- | | |

Der vorliegende Recherchenbericht wurde für alle Patentansprüche erstellt

| Recherchenort | Abschlußdatum der Recherche | Prüfer |
|---|---|---|
| DEN HAAG | 14-09-1992 | BARON C. |

Europäisches
Patentamt

**EUROPÄISCHER RECHERCHENBERICHT**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A,D | DE-A-3 529 683   (MONFORTS)<br>----- | | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 14-09-1992 | BARON C. |

EPO FORM 1503 03.82 (P0403)